# FASCICULE DE BREVET EUROPEEN

(11) **EP 2 174 764 B1**
(45) Date de publication et mention de la délivrance du brevet: **05.12.2012**
(21) Numéro de dépôt: 09290765.8
(22) Date de dépôt: 06.10.2009
(51) Int. Cl.: B29B 17/00, B29B 17/04

(54) **Procédé de réalisation d'un granulé issu de recyclage**
Verfahren zur Herstellung eines aus Recycling entstandenen Granulats
Process of manufacturing pellets from recycled materials

(30) Priorité: 10.10.2008 FR 0805627
(43) Date de publication de la demande: 14.04.2010
(73) Titulaire: Centre d'étude et de recherche pour l'automobile (CERA), 51100 Reims (FR)
(72) Inventeur: Ribes, Stéphane, 51100 Reims (FR)
(74) Mandataire: Sayettat, Julien Christian

(56) Documents cités:
- EP-A1- 1 731 283
- WO-A1-03/035350
- US-A- 5 852 115
- US-A1- 2003 075 824
- US-A1- 2007 212 531
- US-B1- 6 241 168

## Description

L'invention concerne un procédé de réalisation d'un granulé issu de recyclage, un granulé issu dudit procédé, une utilisation d'un tel granulé et un composant issu d'une telle utilisation.

Il est connu de mettre en oeuvre un procédé comprenant une étape de broyage d'un composant usagé à base de matériau thermoplastique afin d'en tirer un granulé issu de recyclage.

Les composants réalisés à partir d'un tel granulé - notamment par moulage par injection - présentent des propriétés mécaniques dégradées, en particulier en terme de module de traction, par rapport à des composants réalisés à partir de matière thermoplastique non issue du recyclage.

Par ailleurs, on connaît des complexes comprenant une couche fibreuse dont les fibres sont non fusibles en dessous d'une température T2 et une couche d'envers fusible de température de fusion T1 inférieure à T2.

Ces complexes sont par exemple sous la forme de tapis de sol de véhicule automobile, la couche fibreuse étant à base de moquette ou d'aiguilleté et la couche d'envers étant par exemple à base de polyéthylène ou d'éthylène propylène diène monomère.

Ces complexes sont très difficilement recyclables. On connait des documents WO-03/035350, US 2003/075824 et EP 1731283 de procédés de recyclage de tapis.

L'invention a pour but de proposer leur valorisation sous forme d'un granulé utilisable pour réaliser des composants, notamment par moulage par injection.

A cet effet, et selon un premier aspect, l'invention propose un procédé de réalisation d'un granulé issu de recyclage comprenant les étapes successives suivantes :
- prévoir un complexe comprenant une couche fibreuse, dont les fibres sont non fusibles en dessous d'une température T2, et une couche d'envers fusible de température de fusion T1 inférieure à T2,
- broyer ledit complexe de sorte à obtenir un broyat,
- porter ledit broyat à une température supérieure à T1 et inférieure à T2, afin d'obtenir une matière visqueuse,
- réaliser ledit granulé à partir de ladite matière visqueuse.

On peut de la sorte effectuer la valorisation d'un complexe usagé sous la forme d'un granulé utilisable pour réaliser des composants, notamment automobiles.

Selon d'autres aspects, l'invention propose un granulé issu dudit procédé, une utilisation d'un tel granulé et un composant issu d'une telle utilisation.

D'autres particularités et avantages de l'invention apparaîtront dans la description qui suit.

On décrit à présent un procédé de réalisation d'un granulé issu de recyclage comprenant les étapes successives suivantes :
- prévoir un complexe - notamment sous forme de chutes de découpe ou de rebuts de production - comprenant une couche fibreuse, dont les fibres sont non fusibles en dessous d'une température T2 - c'est à dire que lesdites fibres sont fusibles ou non -, et une couche d'envers fusible de température de fusion T1 inférieure à T2,
- broyer ledit complexe de sorte à obtenir un broyat,
- porter ledit broyat à une température supérieure à T1 et inférieure à T2, afin d'obtenir une matière visqueuse,
- réaliser ledit granulé à partir de ladite matière visqueuse.

Selon une réalisation, l'étape de réalisation du granulé à partir de la matière visqueuse se fait par extrusion - par exemple par centrifugation dans un tambour pourvu d'orifices - de ladite matière visqueuse en filaments, puis hachage desdits filaments une fois refroidis afin d'obtenir ledit granulé.

Selon une réalisation, l'étape de portage du broyat à une température supérieure à T1 et inférieure à T2 - appelée aussi étape de densification - afin d'obtenir une matière visqueuse, se fait par friction, par exemple avec le tambour mentionné ci-dessus ou avec une vis sans fin rotative.

Selon une réalisation, la couche fibreuse est une moquette à base de fibres de polyamide disposées en touffes sur un support - notamment en polyester-, ledit support comprenant sur son envers une sous couche de latex d'accrochage desdites touffes.

Selon une réalisation, la couche fibreuse est un aiguilleté à base de fibres de polyester comprenant sur son envers une sous couche de latex d'accrochage desdites fibres.

Selon une réalisation, la couche fusible est à base de polyéthylène.

Elle peut comprendre en outre un film d'envers bicouche polyéthylène/polyamide, destiné à former barrière à de la mousse d'envers qui pourrait surmouler la couche d'envers, ceci pour former ressort dans une application d'isolation acoustique de type « masse/ressort ».

Selon une réalisation, la couche fusible est à base d'éthylène propylène diène monomère.

La couche fusible peut comprendre dans ce cas une charge à base de poudre de charge minérale dispersée, telle que du carbonate de calcium, de sorte à former couche d'étanchéité d'un système d'isolation acoustique de type « masse/ressort ».

Selon une réalisation, la granulométrie du broyat est de l'ordre de 10 mm.

On décrit à présent un granulé issu du recyclage obtenu par un tel procédé, ledit granulé comprenant des fibres synthétiques de titre compris entre 5 et 30 dtex, lesdites fibres provenant notamment d'une couche fibreuse à base de moquette ou d'aiguilleté.

On décrit à présent une utilisation d'un granulé issu de recyclage, selon le procédé sus décrit, pour réaliser une pièce injectée, ladite utilisation prévoyant de:
- mélanger ledit granulé à un deuxième granulé de température de fusion T3 inférieure à T2,
- injecter le mélange de granulés porté à température supérieure à T3 et à T1 et inférieure à T2 dans un moule,
- démouler la pièce obtenue.

En variante, le mélange de granulés sus décrit est porté à température supérieure à T3 et à T1 et inférieure à T2 et utilisé pour alimenter une filière d'extrusion.

Selon une réalisation, l'étape d'injection est réalisée par alimentation de la vis d'injection par deux dispositifs d'alimentation - par exemple des trémies - comprenant respectivement le granulé issu de recyclage et le deuxième granulé, ledit granulé issu de recyclage représentant entre 10 et 40% en poids du mélange formé, notamment entre 15 et 25%, notamment de l'ordre de 20%.

Selon une réalisation, le deuxième granulé est à base de polypropylène recyclé présentant un module de traction de l'ordre de 800 MPa.

On réalise ainsi des composants uniquement à base de matières recyclées.

On peut ainsi, uniquement à partir de matières recyclées, réaliser un composant - par exemple un écran sous moteur de véhicule automobile - issu d'une utilisation telle que décrite ci-dessus, ledit composant présentant un module de traction compris entre 1000 et 1200 MPa.

Un tel module est notamment obtenu lorsque le deuxième granulé est à base de polypropylène recyclé de module de traction de l'ordre de 800 MPa.

Un tel accroissement du module s'explique par le rôle de renforcement qui est apporté par les fibres du complexe d'origine.

En variante, le granulé issu de recyclage pourrait être utilisé comme une charge au sein d'une matrice thermoplastique mise en forme par compression, extrusion, etc...

En autre variante, le granulé issu de recyclage pourrait être utilisé comme une charge au sein d'une matrice de polyuréthanne moulée par « moulage par injection réaction » (RIM).

## Revendications

1. Procédé de réalisation d'un granulé issu de recyclage comprenant les étapes successives suivantes :
• prévoir un complexe comprenant une couche fibreuse, dont les fibres sont non fusibles en dessous d'une température T2, et une couche d'envers fusible de température de fusion T1 inférieure à T2,
• broyer ledit complexe de sorte à obtenir un broyat,
• porter ledit broyat à une température supérieure à T1 et inférieure à T2, afin d'obtenir une matière visqueuse,
• réaliser ledit granulé à partir de ladite matière visqueuse.

2. Procédé selon la revendication 1, **caractérisé en ce que** l'étape de réalisation du granulé à partir de la matière visqueuse se fait par extrusion de ladite matière visqueuse en filaments, puis hachage desdits filaments une fois refroidis afin d'obtenir ledit granulé.

3. Procédé selon l'une quelconque des revendications 1 ou 2, **caractérisé en ce que** l'étape de portage du broyat à une température supérieure à T1 et inférieure à T2, afin d'obtenir une matière visqueuse, se fait par friction.

4. Procédé selon l'une quelconque des revendications 1 à 3, **caractérisé en ce que** la couche fusible est à base de polyéthylène.

5. Procédé selon l'une quelconque des revendications 1 à 3, **caractérisé en ce que** la couche fusible est à base d'éthylène propylène diène monomère.

6. Utilisation d'un granulé issu d'un procédé selon l'une quelconque des revendications 1 à 5 pour réaliser une pièce injectée, ladite utilisation prévoyant de:
• mélanger ledit granulé à un deuxième granulé de température de fusion T3 inférieure à T2,
• injecter le mélange de granulés porté à température supérieure à T3 et à T1 et inférieure à T2 dans un moule,
• démouler la pièce obtenue.

7. Utilisation selon la revendication 6, **caractérisée en ce que** l'étape d'injection est réalisée par alimentation de la vis d'injection par deux dispositifs d'alimentation comprenant respectivement le granulé issu de recyclage et le deuxième granulé, ledit granulé issu de recyclage représentant entre 10 et 40% en poids du mélange formé, notamment entre 15 et 25%, notamment de l'ordre de 20%.

8. Utilisation selon l'une quelconque des revendications 6 ou 7, **caractérisée en ce que** le deuxième granulé est à base de polypropylène recyclé présentant un module de traction de l'ordre de 800 MPa.

## Claims

1. Process for producing a pellet obtained from recycling, including the following series of steps:
- providing a complex including a fibrous layer, of which the fibres are non-fusible below a temperature T2, and a backside layer fusible at a melting temperature T1 below T2,
- grinding said complex so as to obtain a ground material,
- bringing said ground material to a temperature above T1 and below T2, so as to obtain a viscous material,
- producing said pellet from said viscous material.

2. Process according to claim 1, **characterized in that** the step of producing the pellet from the viscous material is performed by extrusion of said viscous material into filaments, then hashing said filaments once cooled so as to obtain said pellet.

3. Process according to either one of claims 1 or 2, **characterized in that** the step of bringing the ground material to a temperature above T1 and below T2, so as to obtain a viscous material, is performed by friction.

4. Process according to any one of claims 1 to 3, **characterized in that** the fusible layer is based on polyethylene.

5. Process according to any one of claims 1 to 3, **characterized in that** the fusible layer is based on ethylene propylene diene monomer.

6. Use of a pellet obtained from a process according to any one of claims 1 to 5 in order to produce an injected part, wherein said use involves:
- mixing said pellet with a second pellet with a melting temperature T3 below T2,
- injecting the pellet mixture brought to a temperature above T3 and T1 and below T2 into the mould,
- removing the part obtained from the mould.

7. Use according to claim 6, **characterized in that** the injection step is performed by feeding the injection screw by two feed devices including, respectively, the pellet obtained by recycling and the second pellet, wherein said pellet obtained by recycling represents between 10 and 40% by weight of the mixture formed, in particular between 15 and 25%, and in particular approximately 20%.

8. Use according to either one of claims 6 or 7, **characterized in that** the second pellet is based on recycled polypropylene having a tensile modulus on the order of 800 MPa.

## Patentansprüche

1. Verfahren zur Herstellung eines aus Recycling stammenden Granulats, umfassend die folgenden aufeinander folgenden Schritte:
- Bereitstellen eines Komplexes, umfassend eine Faserschicht, deren Fasern unterhalb einer Temperatur T2 nicht schmelzbar sind, und eine Rückschicht, schmelzbar bei einer Schmelztemperatur T1 die niedriger als T2 ist,
- Zerkleinern des besagten Komplexes, um ein zerkleinertes Gut zu erhalten,
- Bringen des besagten zerkleinerten Guts auf eine Temperatur, die höher als T1 und niedriger als T2 ist, um eine viskose Masse zu erhalten,
- Herstellen des besagten Granulats aus der besagten viskosen Masse.

2. Verfahren nach Anspruch 1, **dadurch gekennzeichnet, dass** der Schritt des Herstellens des Granulats aus der viskosen Masse durch Extrusion der besagten viskosen Masse zu Strängen und dann Schneiden der besagten, einmal abgekühlten Stränge, um das besagte Granulat zu erhalten, erfolgt.

3. Verfahren nach einem der Ansprüche 1 oder 2, **dadurch gekennzeichnet, dass** der Schritt des Bringens des zerkleinerten Guts auf eine Temperatur, die höher als T1 und niedriger als T2 ist, um eine viskose Masse zu erhalten, durch Reibung erfolgt.

4. Verfahren nach einem der Ansprüche 1 bis 3, **dadurch gekennzeichnet, dass** die schmelzbare Schicht auf Basis von Polyethylen ist.

5. Verfahren nach einem der Ansprüche 1 bis 3, **dadurch gekennzeichnet, dass** die schmelzbare Schicht auf Basis von Ethylen-Propylen-Dien-Monomer ist.

6. Verwendung eines von einem Verfahren nach einem der Ansprüche 1 bis 5 stammenden Granulats, um ein Spritzgießteil herzustellen, wobei die besagte Verwendung vorsieht:
- Mischen des besagten Granulats mit einem zweiten Granulat bei einer Schmelztemperatur T3, die niedriger als T2 ist,
- Spritzen des Gemischs von Granulaten, das auf eine Temperatur gebracht wurde, die höher als T3 und T1 und niedriger als T2 ist, in eine Gießform,
- Entformen des erhaltenen Teils.

7. Verwendung nach Anspruch 6, **dadurch gekennzeichnet, dass** der Spritzgießschritt durch Speisen der _{S}pritzgießschnecke durch zwei Speisevorrichtungen durchgeführt wird, jeweils umfassend das aus Recycling stammende Granulat und das zweite Granulat, wobei das besagte aus Recycling stammende Granulat zwischen 10 und 40 Gew.-% des gebildeten Gemischs, insbesondere zwischen 15 und 25 %, insbesondere in Höhe von 20 % ausmacht.

8. Verwendung nach einem der Ansprüche 6 oder 7, **dadurch gekennzeichnet, dass** das zweite Granulat auf Basis von recycliertem Polypropylen ist, aufweisend ein Zugmodul in Höhe von 800 MPa.
